# EUROPEAN PATENT APPLICATION

(11) **EP 2 692 555 A1**
(43) Date of publication of application: **05.02.2014**
(21) Application number: 12005659.3
(22) Date of filing: 03.08.2012
(51) Int. Cl.: B60D 5/00

(54) **Joint for joining a first car and a second car of a multi-car vehicle and multi-car vehicle**

(71) Applicant: Ego International B.V., 1050 Brüssel (BE)
(72) Inventor: Hjort, Mathias, 77636 Hedemora (SE); Fälth, Tommy, 77670 Vikmanshyttan (SE)
(74) Representative: Tilmann, Max Wilhelm

(57) **Abstract**

A joint (3) for joining a first car (1) and a second car (2) of a multi-car vehicle having a first joint part (4) suitable to be attached to the first car (1) and having a second joint part (5) attached to the second car (2), the first joint part (4) being pivot-mounted to the second joint part (5) allowing the first joint part (4) to pivot relative to the second joint part (5) about a pivot axis (A) whereby a brake (6) arranged such that the first joint part (4) can move relative to the brake (6), when the brake (6) is not activated, and whereby the brake (6) can apply a brake force to the first joint part (4) that slows down or prevents the movement of the first joint part (4) relative to the second joint part (6), when the brake is activated.

## Description

The invention pertains to a joint for joining a first car and a second car of a multi-car vehicle. The invention also pertains to a multi-car vehicle.

Multi-car vehicles are known in different designs and in different forms of adaptation for uses. Multi-car vehicles, for example, railway-bound trains (street cars and subway-trains also being considered as such trains) are known and are known for the purpose of transporting passengers as well as transporting goods. Further types of multi-car vehicles can be magnetic railway trains or can be buses (road buses as well as buses traveling on fixed tracks). A car of a multi-car vehicle can be a self-supporting cars, whereby the car has sufficient wheels that are placed at sufficient locations such that the car can stand by itself without being supported by other cars, for example a three-wheeled car, a four wheeled car or a car with even more wheels. A car of a multi-car vehicle can also be of the none-self-supporting type, whereby the car has no wheels or only wheels provided in such number or arranged at such a place that the car can not stand by itself, but is vertically supported by at least one neighboring car.

From one possible field of application of the invention, namely from buses, joints are known for joining a first car and a second car of the bus having a first joint part attached to the first car and a second joint part attached to the second car, whereby the first joint part is pivot-mounted to the second joint part in a manner allowing the first joint part to pivot relative to the second joint part about a vertical pivot axis. Such buses are often referred to as "articulated bus". Buses of this type are known, where two gashydraulic dampers are attached to the first joint part with their respective one end and with the second car with their respective other ends. The dampers can dampen the pivot movement of the first joint part relative to the second joint part about the vertical pivot axis. The gashydraulic dampers used are of large built and disadvantageously take up a lot of the space between the first car and the second car. The space used up by the dampers can not be used for cables or pipes passing between the first car and the second car, which is why designs of such buses are known, where the cables and/or pipes passing from the first car to the second car have been placed above the plane of the floor of the first car and the second car. Cables and pipes arranged in such a manner take up room that could otherwise be used for passengers and which lead to a gangway being provided between the first car and the second car to have a width of the area that can be used by the passengers that is substantially slimmer than the overall width of the multi-car vehicle.

It is an object of the invention to provide joint for joining a first car and a second car of a multi-car vehicle having a first joint part suitable to be attached to the first car and having a second joint part suitable to be attached to the second car and to provide a multi-car vehicle that does away with at least one of the disadvantages of the prior art.

This problem is solved by the joint according to claim 1 and the multi-car vehicle according to claim 10.

The invention is based on the basic idea to do away with gashydraulic dampers that are often very volume consuming and often insufficient in their ability to slow down the pivot movement of the first joint part relative to the second joint part. To replace the gashydraulic dampers, the invention suggests to provide a brake arranged in such a manner that the first joint part can move relative to the brake and that can apply a brake force to the first joint part that slows down or prevents the movement of the first joint part relative to the brake and/or the pivot movement of the first joint part relative to the second joint part, when the brake is activated. Using a brake instead of gashydraulic dampers on the one hand provides the advantage that brake-types can be selected that take up only a little volume. Additionally or alternatively using a brake instead of a gashydraulic damper can allow for the brake to be better adapted to the systems already present in the multi-car vehicle, for example a pneumatic or a hydraulic braking-system, the infrastructure of which can be used to also work the brake to be provided to slow down the movement of the first joint part. Additionally or alternatively using a brake can allow for the slowing down of the movement to be provided in a more precise and more dosed manner. Additionally or alternatively using a brake can allow for the movement of the first joint part to be stopped completely in a more simple manner, if the brake is designed to allow for a complete stopping of the pivot movement in a preferred embodiment. Additionally or alternatively using a brake allows the brake to be used as a control element of a control system of the multi-car vehicle in a more simple manner, if the multi-car vehicle has a control system in a preferred embodiment. Additionally or alternatively using a brake can reduce the weight of the elements arranged between the first car and the second car.

The joint of the invention is suitable for joining a first car and a second car of a multi-car vehicle. The joint has a first joint part suitable to be attached to the first car and has a second joint part suitable to be attached to the second car.

To be suitable to be attached to a car, the joint part in a preferred embodiment has connection means that can be used to attach the joint part to a car. Such a connection means can be for example a plate or a structure of plates that can be welded to a car. Preferred designs like this are often referred to in the field of trains by the German term "Lagerbock". The connection means can also be a plate that can be gripped by gripping means of the car, for example hooks. The connection means can also be for example a plate with screw holes through which screws can be arranged to bolting the plate to the respective car. The connections means can also be of any other type known to the skilled person for connecting parts of a joint to a first car and a second car for joining these cars of a multi-car vehicle.

In a preferred embodiment, the connection means that are provided to make the first joint part suitable to be attached to a first car are different from the connection means that are provided to make the second joint part suitable to be attached to the second car. For example, the connection means of the first joint part can be stiff and would connect the first joint part to the first car in a manner that would rigidly hold the first joint part to the first car without allowing the first joint part to pivot relative to the first car. The connections means of the second joint part could for example include a joint or joints that would allow the second joint part to be connected to the second car in a manner that would allow the second joint part to pivot about a pivot axis that is non-vertical and is preferably horizontal. Also, an embodiment could be, where the connection means of the first joint part allow such a pivot movement relative to the first car, while the connection means of the second joint part are stiff. In a different, but likewise preferred embodiment the connection means of the first joint part and the connection means of the second joint part are of the same type, can for example both be of the pivoting type or can both be of the stiff type.

The first joint part is pivot-mounted to the second joint part in a manner allowing the first joint part to pivot relative to the second joint part about a pivot axis. The brake of the joint is arranged in such a manner that the first joint part can move relative to the brake. However, the brake is designed and arranged in such a manner that it can apply a brake force to the first joint part that slows down or prevents the movement of the first joint part relative to the brake and/or the pivot movement of the first joint part relative to the second joint part, when the brake is activated.

Joints are known, especially for those types of joints, where the pivot axis is arranged essentially vertical, where at those specific joints one joint part rests upon the other joint part. In those specific joints, the first joint part can have a section that is arranged vertically above a section of the second joint part. Or in those specific types the first joint part might be designed with a mouth-type section, whereby a section of the second joint part is arranged to protrude into the mouth of this mouth-type section of the first joint part. The joint of the invention can be of this specific type of joint. However the term "pivot-mounted" is not understood to be limited to such designs, where sections of the first joint part would be arranged vertically above sections of the second joint part and is likewise not to be understood to be limited to such designs, where the first joint part in any way exert - for example by its weight - a vertical force onto the second joint part. The invention is also directed to such type of joints, where sections of the second joint part are arranged above sections of the first joint part or whereby sections of the second joint part are designed in a mouth-type manner with sections of the first joint part protruding into the mouth or to such types, where sections of the second joint part exert vertical forces - for example by their weight - to the first joint part. The invention is, however, also directed to such joints, where none of the sections of the first joint part are overlapping sections of the second joint part when viewed along a vertical line of view. The term "pivot-mounted" is therefore also to be understood to encompass such non-overlapping types of joints.

The invention claims the first joint part to be allowed to pivot relative to the second joint part about a pivot axis. In a preferred embodiment the first joint part is pivot-mounted to the second joint part in a manner allowing the first joint part to pivot relative to the second joint part about the pivot axis about a pivot angle of at least 90°, preferably of at least 135° and even more preferred of at least 180°. Additionally or alternatively in a preferred embodiment the first joint part is pivot mounted to the second joint part in a manner allowing the first joint part to pivot relative to the second joint part about a pivot axis about an angle of up to 240° preferably of an angle of up to 200° and preferably of an angle of up to 180°. Especially in the one possible field of application of the invention, namely for buses that run on roads, it is advantageous, if the joint allows the first joint part to pivot about the second joint part about a relatively large angle. Factors that limit the angle are often the type of the pivot-mount. Preferably, a design of a pivot mount is chosen that would allow by its basic design for two parts to pivot relative to each other about 360°, for example a pivot-mount where the two parts are the inner and outer ring respectively of a ball baring or of the type where a pivot pin joints an eye-shaped first part arranged on the pivot pin to an eye-shaped second part of the pivot pin. Thus, in a preferred embodiment, the limitation of the pivot angle is not due to the type of pivot mounting chosen. In a preferred embodiment, the limitation to the pivot angle is due to the geometric shape of the first joint part and/or the second joint part. In preferred embodiments, the first joint part and/or the second joint part can for example include a support structure of triangular shape with the pivot mounting being at a tip of the triangular shape and the base of the triangle opposite to this tip being used to arrange connection means there at to allow the connection to the car. Depending on the shape of this triangular support, this triangular support could limit the pivot angle. Thus in choosing the geometric design of the first joint part and the second joint part, the pivot angle can be influenced. Also the pivot angle can be influenced by arranging the sections of the first joint part in a different plane perpendicular to the pivot axis than the sections of the second joint part. Choosing such a design would allow the sections of the first joint part to pivot relative to the sections of the second joint part without contacting them and would therefore allow for an especially large pivot angle. It is to be expected that in most fields of application of the invention the pivot angle will not be influenced as much by the joint itself, but by the design of the cars to which the joint will be attached to form the multi-car vehicle.

According to the invention the brake of the joint is arranged in such a manner that the first joint part can move relative to the complete brake or at least relative to parts that together with other parts arranged as part of the first joint part form the brake when the brake is not activated, whereby the brake can apply a brake force to the first joint part that slows down or prevents the movement of the first joint part relative to the brake and/or the pivot movement of the first joint part relative to the second joint part, when the brake is activated. In a preferred embodiment the relative movement of the first joint part relative to the brake or relative to the respective parts of the brake is the pivot movement that the first joint part can make relative to the second joint part.

An example of an embodiment, where the first joint part can pivot relative to the complete brake would be a brake attached to the second joint part or to the second car having a displaceable element, for example a brake pad, that can be moved from a retracted, inactive position, where it does not contact any section of the first joint part into an activated, extended position, where the element (for example the brake pad) contacts a section of the first joint part. In such an embodiment, the first joint part could pivot relative to the complete brake. Also, where the brake is designed as an eddy-current brake, the elements making up the eddy-current brake, for example the elements necessary for creating the magnetic field, could be attached to the second joint arm or the second car in such a manner that a first joint arm made at least in parts of metal for this specific embodiment would move through the magnetic field created and would thereby pivot relative to the complete brake. An example for a design, whereby the first joint part can pivot relative to parts that together with other parts form the brake would be a drum brake, where parts of the drum brake would be arranged as parts of the first joint part and other parts of the drum brake would be provided as part of the second joint part or as parts being attached to the second car.

In a preferred embodiment, the brake is a brake with a brake pad, the brake pad being moved by a hydraulic or pneumatic cylinder. The brake can, however, also be an eddy-current type brake.

The brake is designed to at least slow down the the movement of the first joint part relative to the brake and/or the pivot movement of the first joint part relative to the second joint part, when the brake is activated. In a preferred embodiment, the brake is designed in such a manner that it can stop the movement of the first joint part relative to the brake and/or the pivot movement of the first joint part relative to the second joint part, when the brake is activated. This can - for example - be arranged by choosing a brake that can introduce a sufficiently large brake force that would lead to the stop of the pivot movement of the first joint part relative to the brake and/or relative to the second joint part in the normal conditions of use of the multi-car vehicle. For example, for an articulated bus, it is estimated that a brake that when applying the maximum brake force to the first joint part creates a counter-moment (a brake moment) of more than 2 kNm, preferably more than 5 kNm and preferably up to 12 kNm about the pivot axis should be sufficient to stop the pivot movement of the first joint part relative to the brake and/or relative to the second joint part in all normal driving conditions of such an articulated bus.

In a preferred embodiment the brake is fixedly connected to the second joint part in a way that it can not pivot about any section of the second joint part. In a further preferred embodiment, the brake is provided to be fixedly connected to the second car in the sense that the brake can not pivot relative to the second car.

In a preferred embodiment, the brake has a brake pad arranged to be movable from a retracted position, which also could be called the inactive position, to a brake position, which also could be called the activated position, whereby the brake pad contacts the first joint part in the brake position and whereby means for applying a normal force to the brake pad in the brake position are provided. Such a brake design can provide an embodiment of the invention that could be put into practice easily. Such a design can be used to refurbish already existing joints for joining a first car and a second car of a multi-car vehicle without having changed the already existing parts of this joint. The brake simply needs to be added to this joint and a surface of the first joint part has to be identified upon which the brake pad can act in the brake position. Also, such a brake can make use of pneumatic or hydraulic systems ready present in the multi-car vehicle, as such brakes can easily be adopted to make use of pneumatic or hydraulic systems for moving the brake pad and for applying a normal force to the brake pad in the brake position. Such an embodiment can be seen as an embodiment of the design, where the first joint part can pivot relative to the complete brake. Such an embodiment can, however, also be put into practise for the designs where the first joint part can pivot relative to parts together with other parts of the brake. For example, the first joint part can be provided with additional surfaces that would normally not be provided on the first joint part of a joint as would otherwise be used. These additional surfaces can be provided as surfaces, upon which the brake pad can act.

In a preferred embodiment, the first joint part has a ring-shaped journal ring and the second joint part has a ring-shaped journal ring arranged co-axially with the journal ring of the first joint part. The ring-shaped journal ring of the first joint part and the ring-shaped journal ring of the second joint part can have contacting surfaces that are especially adopted to have low friction, for example by the choice of the surface material or for example by providing a fluid between the surfaces. Providing means for achieving low friction between the ring-shaped journal ring of the first joint part and the ring-shaped journal ring of the second joint part allows for the pivot movement of the first joint part relative to the second joint part to take place. In an even preferred embodiment, roller elements, like balls, cylinders, especially needles, drums, bevels, cones or truncated cones are provided between the ring-shaped journal ring of the first joint part and the ring-shaped journal ring of the second joint part. Providing these roller elements facilitates the pivot movement of the first joint part relative to the second joint part. In a preferred embodiment, the ring-shaped journal rings have surfaces arranged in planes parallel to each other and facing each other. In a different embodiment, the ring-shaped journal rings can have surfaces arranged to face each other, whereby however the ring face of the one ring-shaped journal ring is arranged co-axially inside the other ring-shaped journal ring, the facing surfaces thereby having normal vectors that point inwards and outwards respectively in the radial direction of the rings. In a preferred embodiment, the ring-shaped journal ring of the first joint part and the ring-shaped journal ring of the second joint part form part of a bearing, for example a ball bearing.

In a preferred embodiment the journal ring of the first joint part has a brake surface, whereby the brake pad of a brake that is arranged to be movable from a retracted position to a brake position contacts the brake surface in the brake position. Making use of the journal ring as brake surface to be contacted by the brake pad allows for a design, where the brake force to be applied to the first joint part can be provided to the first joint part essentially in all positions that the first joint part can take up relative to the second joint part when pivoting relative to the second joint part.

In a preferred embodiment, the brake pad of a brake, which is arranged to be movable from a retracted position to a brake position, is arranged as part of a brake caliper. The brake caliper in this embodiment is arranged to encompass a section of the first joint part, whereby the brake pad is arranged and designed in such a manner that it contacts a surface of that section in the brake position. Making use of a brake caliper provides the advantage, that a substantial brake force can be applied to the first joint part.

In a preferred embodiment the section of the first joint part to which the brake pad arranged as part of the brake caliper applies its brake force is a rim-type plate attached to the outside of the journal ring of the first joint part. A rim-type plate is understood as a plate that has at least the shape of a section of a ring, but also can have the shape of a complete ring. This rim-type plate is attached to the outside of the journal ring of the first joint part in such a manner that it protrudes from the remaining elements of the first joint part in such a manner that the brake caliper can encompass his rim-type plate.

In a preferred embodiment the first joint part has a substantially triangular support. In an especially preferred embodiment, the substantially triangular support is provided for those embodiments of the invention wherein the first joint part has a ring-shaped journal ring in such a manner that the substantially triangular support supports the journal ring of the first joint part. Providing a substantially triangular support has proven to be an advantageous design for a support, especially because such a support can take up longitudinal forces along the longitudinal axis, if the multi-car vehicle is arranged with all cars arranged in a straight line, but also to take up horizontal forces perpendicular to this longitudinal force and also to take up moments about the pivot axis. Also, providing a triangular support allows for a compact design of the joint. The term "triangular support" is understood to also encompass such designs, where the first joint part has a first support beam and a second support beam, whereby the first support beam and the second support beam are arranged at an angle to one another, both branching of from a central point (a third support beam to complete the triangle possibly missing in certain embodiments). The two support beams can, however, be connected by a third beam that also forms part of the first joint part and is provided to complete the triangle. Such a third beam can, however, also be a part of the first car, to which the first joint part is to be attached, for example a bar of a frame onto which the remainder of the first car is built.

In a preferred embodiment, a rim-type plate can be provided between the first beam and the second beam that form a triangular support. In a preferred embodiment, this rim-type plate can be attached to the outside of the journal ring of the first joint part. In this embodiment, it is especially preferred, if the first beam and the second beam are also attached to the outside of the journal ring of the first joint part. In a different embodiment, the rim-type plate can, however, be also arranged between the two beams in such a manner that the rim-type plate is distanced from a journal ring of the first joint part. In a preferred embodiment, a brake having a caliper is provided in this embodiment to encompass the rim-type plate.

In a preferred embodiment, the brake pad of the brake forms part of a drum brake system arranged on the inside of the journal ring of the first joint. In this embodiment, the brake pad contacts an inward facing surface of the journal ring of the first joint in the brake position.

In a preferred embodiment, the brake is attached to the second joint part. This allows to simplify the handling of the joint when putting the joint into place. In a different embodiment, the brake is designed to be suitable to be attached to the second car. In this embodiment, the brake would therefore not be attached to the second joint part, but directly to the second car. Such an design is preferably chosen, if an existing joint for joining a first car and a second car of a multi-car vehicle is to be refurbished in order to create a joint according to the invention.

The invention is also directed to a multi-car vehicle having a first car and a second car and having a joint according to the invention, whereby the first joint part is attached to the first car and the second joint part is attached to the second car.

In a preferred embodiment, the joint is built into the multi-car vehicle in such a manner that the pivot axis about which the first joint part can pivot relative to the second joint part is arranged substantially vertical. It is expected in the majority of uses for the invention, a pivot movement of the first car relative to the second car is the prime need to be provided by the joint in order to allow the multi-car vehicle to go around a bend. However, it could also be that the primary task of the joint is to allow the first car and the second car to be either offset in different horizontal planes or to be arranged in tilted planes, which are tilted relative to one another about a common horizontal axis. These cases might arise, where the multi-car traing is designed in such a manner that the pivot movements of the car to go around a bend is provided by other means and the joint of the invention is used to bridge misalignments of the cars, for example if the cars go over the top of a hill. In these embodiments, the joint could be built into the multi-car vehicle in such a manner that the pivot axis about which the first joint part can pivot relative to the second joint part is arranged substantially horizontal.

In a preferred embodiment the brake is provided to be fixedly connected to the second car in the sense that the brake can not pivot relative to the second car.

In a preferred embodiment, the first joint part has a ring-shaped journal ring and the journal ring is attached to the support structure that is attached to the first car and whereby the support structure is essentially made from elements made from sheet metal. In the prior art, where joint parts that have a ring-shaped journal ring are used, these journal rings have been made by means of casting metal, for example by cast iron. Designs are known from the prior art, where the joint part having the ring-shaped journal ring and also including the support structure are made as one piece from cast iron. This leads to the joint part being exceptionally heavy. Providing a support structure that is essentially made from elements made from sheet metal allows for the joint part to be designed to have less weight then a joint part with the support structure being made from cast iron.

In a preferred embodiment, the first joint part has connection means and is connected to the first car in a manner that allows the first joint part to pivot relative to the first car about a pivot axis. In a preferred embodiment, this pivot axis is arranged not to be vertical. In a preferred embodiment, this pivot axis is arranged to be substantially horizontal. Allowing the first joint part to pivot relative to the first car, especially in arrangements where the pivot axis is horizontal allows to adopt the multi-car vehicle to allow pivot movements of the first car relative to the second car about this pivot axis. Such pivot movements of the first car relative to the second car can for example take place when the multi-car vehicle is running over an uneven surface, is starting to claim a hill or drives over the top of a hill. Such pivot movements can, however, also occur, when the cars of the multi-car vehicle are unevenly loaded, for example in situations where in an articulated bus all passengers sit in the last row of seats in the bus.

In a preferred embodiment, a second brake is arranged in such a manner that the brake can apply the brake force to the first joint part onto a part of the first car, whereby the application of the brake force slows down or prevents a pivot movement of the first joint part relative to the first car. Providing such a brake allows to counter act the pivot movement of the first car relative to the second car about this pivot axis. Limiting the pivot movement of the first car to the second car in this manner allows for the multi-car vehicle to be stabilized in a desired arrangement of the first car relative to the second car and can therefore aid to improve the driving conditions of the multi-car vehicle.

In a preferred embodiment, the multi car vehicle has a control system and at least one sensor of the group of sensors made up of
- a sensor that measures the relative position and/or the change of relative position of the first car relative to the second car, especially their alignment with regard to their respective longitudinal axis,
- a sensor that measures the relative position of the first joint part relative to the first car, especially the alignment of a horizontal plane of the first joint part relative to a horizontal plane of the first car,
- a gyroscope that measures the rotational movement of the multi-car vehicle or the first car or the second car about a vertical axis,
- a sensor that senses the rotational speed of a wheel of the multi-car vehicle,
- a sensor that senses the turning angle of a steerable wheel of the multi-car vehicle,
- a sensor that senses the weight of the load in the first car and/or the second car,
whereby the control system generates control signals that control the brake based on the information provided by the sensor.

Such a control system can be used to stabilize the driving conditions of the multi-car vehicle.

In a preferred embodiment cables and/or pipes that pass from the first car to the second car are provided in such a manner that they are arranged to pass from the first car to the second car substantially in a horizontal plain below the first joint part and the second joint part. The joint according to the invention allows for designs that are smaller in height (in the direction of the pivot axis about which the first joint part pivots relative to the second joint part) compared to the prior art designs. This possible reduction in height provides a free space below the joint, if the joint is arranged at the same place, where joints from the prior art were arranged. This free space can be used to pass cables and/or pipes from the first car to the second car. In prior art designs, these cables and/or pipes had been passed from the first car to the second car above the joint and in spaces of the multi-car vehicle that would otherwise better be used for passengers (for example within gangways provided between the first car and the second car). The invention allows for these cables and/or pipes to be taken below the joint and to therefore keep the space above the joint completely free as usable space for the designs of the cabins for use of the passengers or gangways for use by the passengers.

The multi-car vehicle according to the invention preferably is a rail-bound train (street cars and subway-trains also being considered as such trains), be it for the purpose of transporting passengers or be it for the purpose of transporting goods. The multi-car vehicle according to the invention preferably can be a magnetic railway train or can be a bus (road buses as well as buses travelling on fixed tracks).

Below, the invention will be described by means of drawings that only shows exemplatory embodiments of the invention.

In the drawings, the figures show the following:
- Fig. 1:: a perspective view from diagonally above onto the middle section of a bus having a first car and a second car, parts of the bus being left away and allowing the view onto the joint for joining the cars,
- Fig. 2:: a view from below onto the middle section of the bus as seen in Fig. 1,
- Fig. 3:: a schematic sketch of the basic principle of the joint according to the invention,
- Fig. 4:: a perspective view of a brake caliper that can be used in the joint according to the invention,
- Fig. 5:: a perspective view on an embodiment of the joint according to the invention,

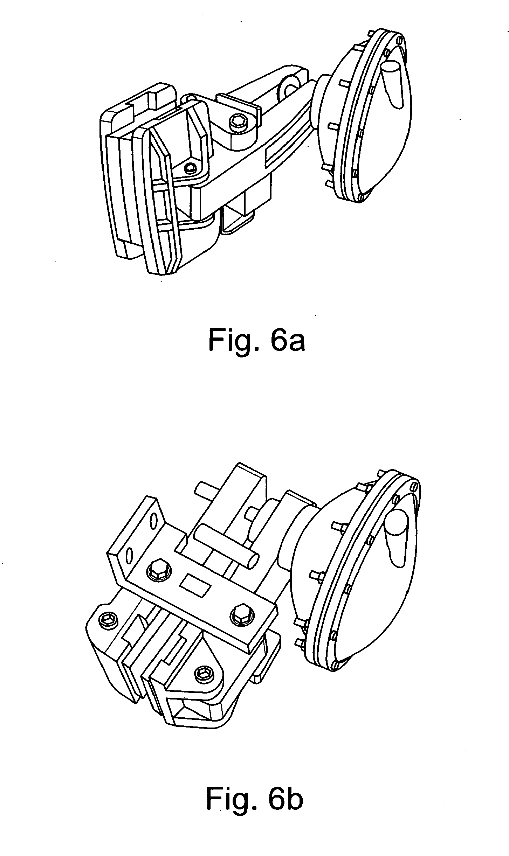

- Fig. 6a, b:: perspective views of different brake calipers that can be used with the joint according to the invention,
- Fig. 7:: a perspective view onto the joint according to the invention as shown in Fig. 5, but shown in a different relative position of the first joint part relative to the second joint part,
- Fig. 8:: a side view onto the joint according to the invention as seen in Fig. 5.

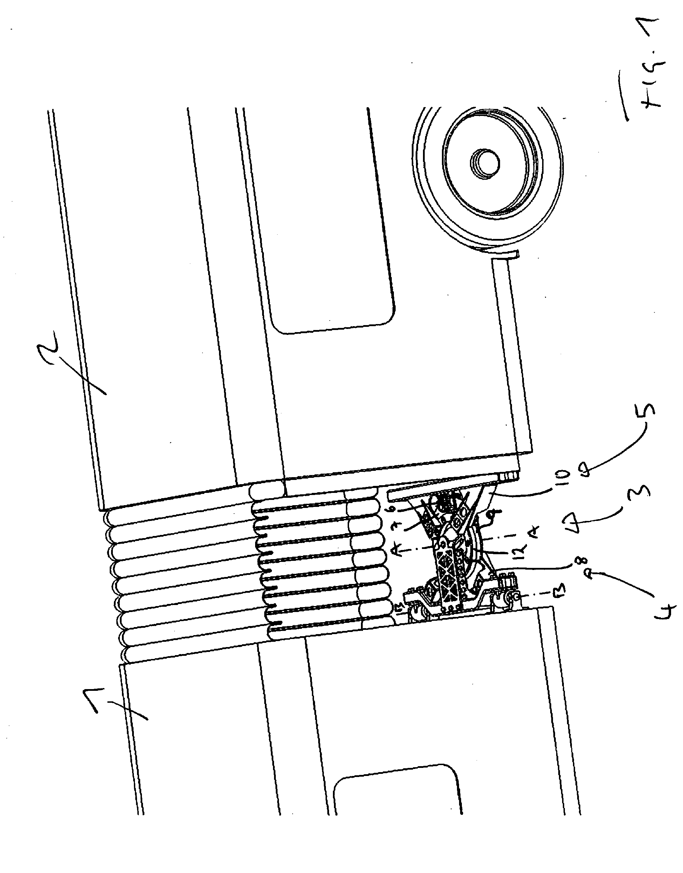

Fig. 1 shows a perspective view from the top onto a middle section of a bus. The bus is a multi-car vehicle having a first car 1 and a second car 2. The first car 1 and the second car 2 are joint by a joint 3. The joint 3 has a first joint part 4 attached to the first car 1 and a second joint part 5 attached to the second car 2. The first joint part 4 is pivot-mounted to the second joint part 5 in a manner allowing the first joint part 4 to pivot relative to the second joint part 5 about the pivot axis A. A brake caliper 6 is arranged in such a manner that the brake caliper encompasses a rim-type plate 7 of the first joint part 4. The brake caliper 6 is attached to the second joint part 5. Since the first joint part is pivot-mounted to the second joint part, the first joint part can also pivot relative to the complete brake caliper 6 about the pivot-axis A-A, when the brake caliper 6 is in a inactive position. The brake caliper 6 can, however, apply a brake force to the rim-type plate 7 of the joint part 4 that slows down or prevents the pivot-movement of the first joint part 4 relative to the brake caliper 6, when the brake caliper 6 is activated.

The first joint part 4 comprises a triangular shaped support 8, whereby a ring-shaped journal ring 9 that is part of the first joint part 4 is integrated into the triangular support 8 of the first joint part 4. The second joint part 5 also has a triangular support 10, a ring-shaped journal ring of the second joint part 5 not been shown in the perspective view of the Fig. 1 forming part of the second joint part 5 and being integrated into the triangular support 10 of the joint part 5 is also provided. A roller bearing is arranged between the ring-shaped journal ring 9 of the first brake part 4 and the ring-shaped journal ring of the second joint part 5.

The first joint part 4 is connected to the first car 1 in a manner that allows the first joint part 4 to pivot relative to the first car 1 about a pivot axis B-B.

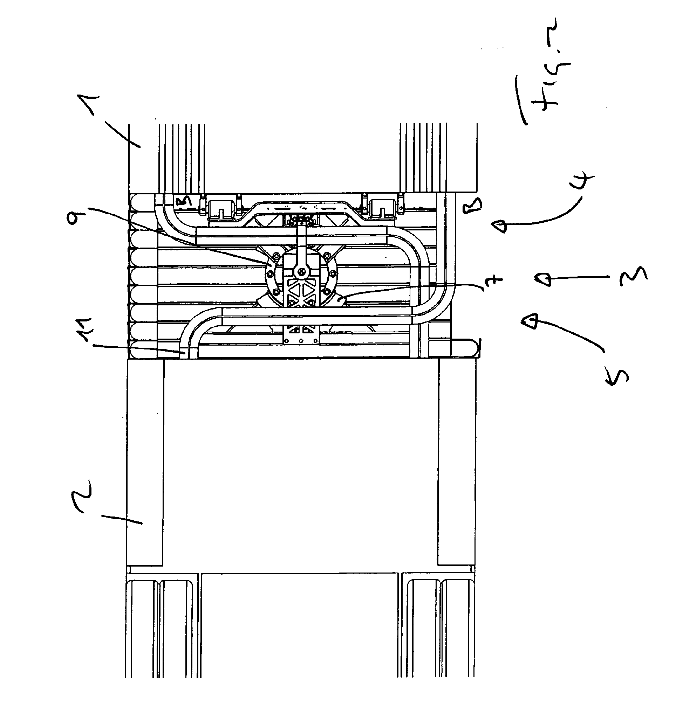

Fig. 2 shows that cables and pipes pass from the first car 1 to the second car 2 in a horizontal plain below the first joint part 4 and the second joint part 5.

A ring-shaped journal ring 12 is provided as part of the triangular support 10 of the second joint part 5.

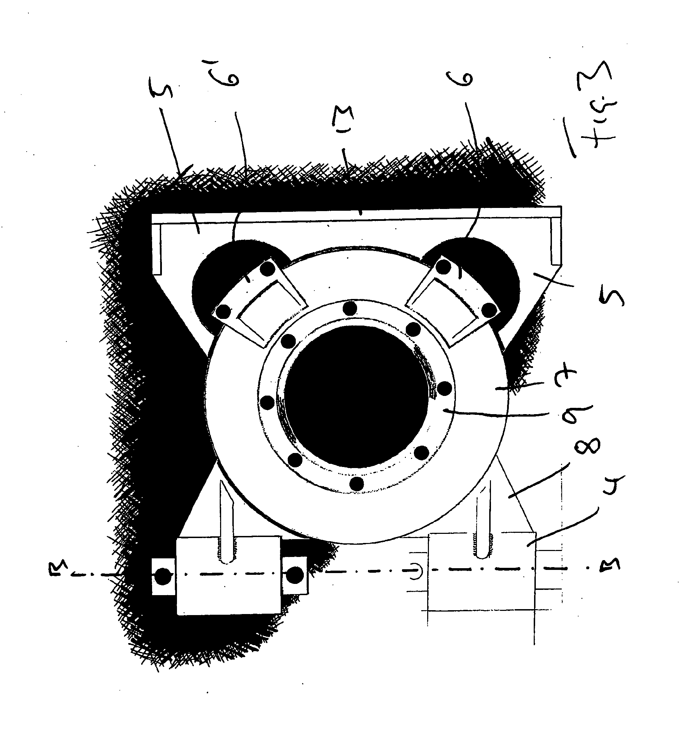

The schematic drawing of Fig. 3 shows that the second joint part 5 can also be provided with two caliper brakes 6 and 6'.

Fig. 3 also shows that the second joint part 5 can have as part of its triangular support a connection plate 13 that can be used to connect the second joint part 5 to the second car 2.

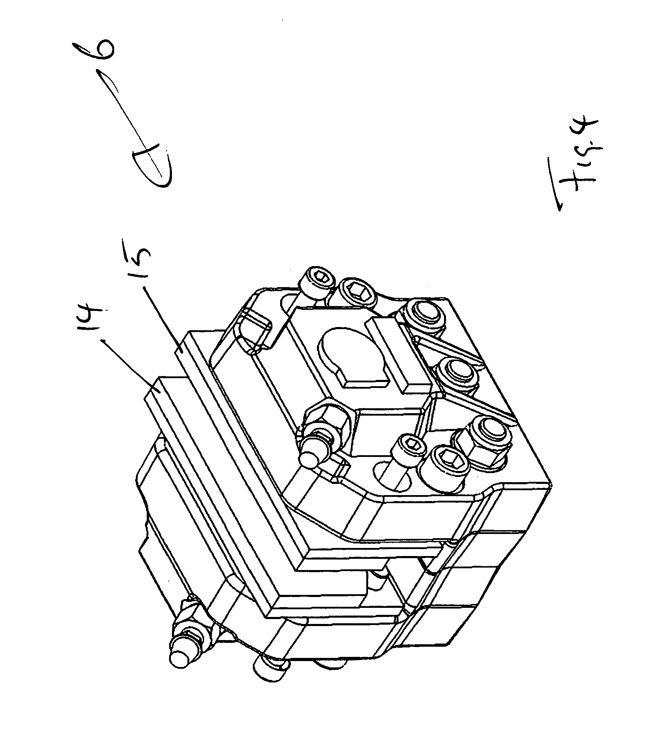

Fig. 4 shows a possible design of the brake caliper 6. This brake caliper 6 has brake pads 14, 15 that can be moved from a retracted position to a brake position, whereby the brake pads 14, 15 contact the rim-type plate 7 of the first joint part 4 in the brake position. The brake caliper 6 also has means for applying a normal force to the brake pads 14, 15 in the brake position by means of hydraulic cylinders.

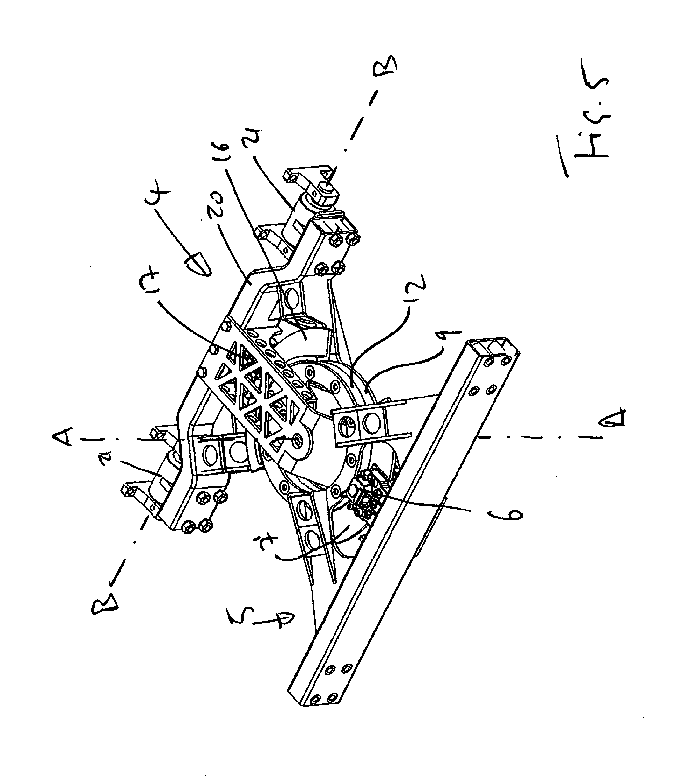

Fig. 5 shows the joint according to the invention in a more detailed drawing and with certain design changes relative to the joint shown in the Fig. 1, 2 and 3. Parts being identical to those of the design shown in Fig. 1, 2 and 3 are numbered with the same reference signs.

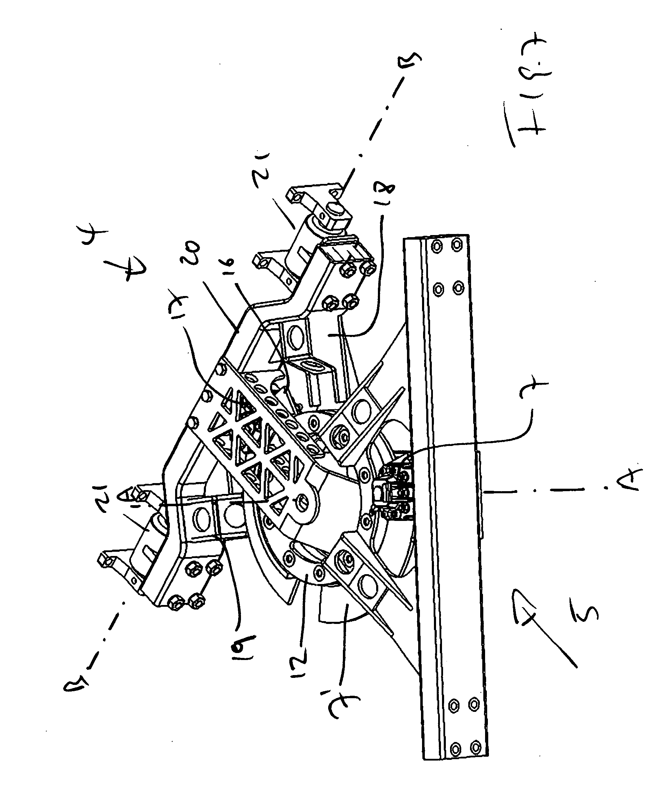

The design shown in the Fig. 5, 7 and 8 shows a rim-type plate 7' of the first joint part 4 that in the design of the Fig. 5, 7 and 8 does not fully encircle the ring-shaped journal ring 9 of the first joint part 4, but only has the shape of the section of a ring. However, in the design shown in the Fig. 5, 7 and 8 also the second joint part 5 is provided with a rim-type plate 16 attached to the ring-shaped journal ring 12 of the second joint part 5. The first joint part 4 is provided with a second caliper brake 17, arranged in such a manner that the second joint part can pivot relative to the caliper brake 17 about the axis A-A, whereby the brake caliper 17 can apply a brake force to the second joint part 5 that slows down or prevents the pivot movement of the second joint part 2 relative to the brake, when the brake caliper 17 is activated.

A further difference of the design shown in the Fig. 5, 7 and 8 is the design of the triangular support of the first joint part 4 and the second joint part 5. The first joint part 4 comprises a triangular support that has a first support beam 18 attached to the ring-shaped journal ring 9 of the first joint part 4 and a second support beam 19 also attached to the ring-shaped journal ring 9 of the first joint part 4. The first support beam 18 and the second support beam 19 are arranged at an angle to one another and symmetrically to the longitudinal axis of the first car 1. The first support beam 18 and the second support beam 19 are connected by a third support beam 20 that completes the triangle. As can be seen, the third support beam 20 is bend such as to make room for the bearings 21 that allow the first joint part 4 to pivot relative to the first car 1 about the axis B-B. The triangular support of the second joint part 5 is of similar design, also having two support beams arranged at an angle to one another and symmetrically to the longitudinal axis of the second car 2 and connected by a third support beam, which in the design of the second joint part is made as a straight beam that allows easy and rigid connection to the second car 2.

Fig. 5, 7 and 8 show that the support structure comprised as part of the first joint part 4 or the second joint part 5 can be made substantially from pieces made from sheet metal, which can reduce the weight of the joint.

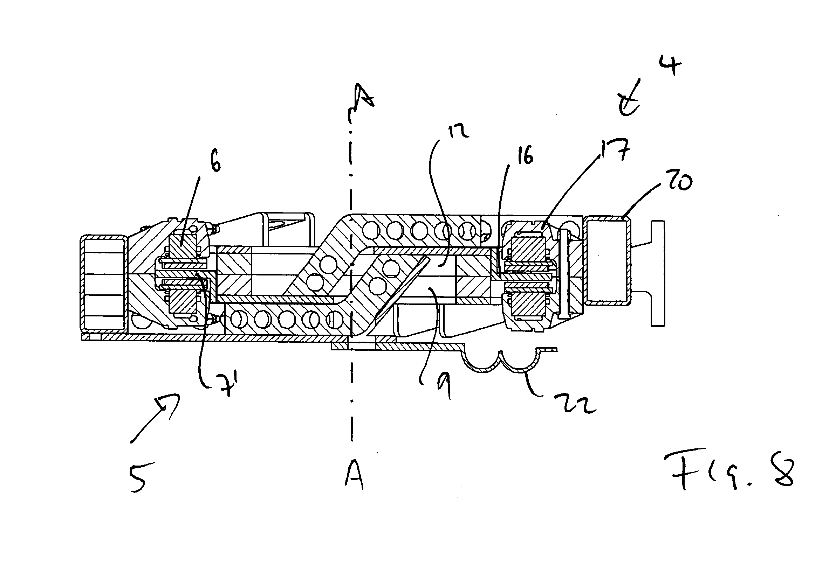

Fig. 8 shows that a support 22 can be provided as part of the joint that can be used to support pipes or cables.

## Claims

1. Joint for joining a first car and a second car of a multi-car vehicle having a first joint part suitable to be attached to the first car and having a second joint part suitable to be attached to the second car, the first joint part being pivot-mounted to the second joint part in a manner allowing the first joint part to pivot relative to the second joint part about a pivot axis
**characterized by**
a brake arranged in such a manner that the first joint part can move relative to the complete brake or relative to parts that together with other parts form the brake, when the brake is not activated, and whereby the brake can apply a brake force to the first joint part that slows down or prevents the movement of the first joint part relative to the brake and/or the pivot movement of the first joint part relative to the second joint part, when the brake is activated.

2. Joint according to claim 1, **characterized in that** the brake has a brake pad arranged to be moveable from a retracted position to a brake position, whereby the brake pad contacts the first joint part in the brake position, and by means for applying a normal force to the brake pad in the brake position.

3. Joint according to claim 1 or 2, whereby the first joint part has a ring-shaped journal ring and the second joint part has a ring-shaped journal ring arranged co-axially with the journal ring of the first joint part.

4. Joint according to claim 3, whereby the journal ring of the first joint part has a brake surface and whereby the brake pad contacts the brake surface in the brake position.

5. Joint according to claim 3, **characterized in that** the brake pad is arranged as part of a brake caliper and **in that** the brake caliper encompasses a section of the first joint part and the brake pad contacts a surface of that section in the brake position.

6. Joint according to claim 5, **characterized in that** the section is a rim-type plate attached to the outside of the journal ring of the first joint part.

7. Joint according to claim 5, **characterized in that** the journal ring of the first joint part comprises a substantially triangular support and that the section, which is contacted by the brake pad in the brake position forms part of that substantially triangular support or is arranged between elements that make up the triangular support.

8. Joint according to claim 3, **characterized in that** the brake pad forms part of a drum brake system arranged on the inside of the journal ring of the first joint and that the brake pad contacts an inward facing surface of the journal ring of the first joint in the brake position.

9. Joint according to any one of claims 1 to 8, **characterized in that** the brake is attached to the second joint part.

10. Multi-car vehicle having a first car and a second car and having a joint according to any ones of claims 1 to 9, where by the first joint part is attached to the first car and the second joint part is attached to the second car.

11. Multi-car vehicle according to claim 11, whereby the first joint part has a ring-shaped journal ring and the journal ring is attached to a support structure that is connected to the first car and whereby the support structure is essentially made from elements made from sheet metal.

12. Multi-car vehicle according to claim 10 or 11, whereby the first joint part is connected to the first car in a manner that allows the first joint part to pivot relative to the first car about a pivot axis.

13. Multi-car vehicle according to claim 12, whereby a second brake is arranged in such a manner that the brake can apply a brake force to the first joint part or to a part of the first car, whereby the application of the brake force slows down or prevents the pivot movement of the first joint part relative to first car.

14. Multi-car vehicle according to any one of claims 10 to 13, **characterized by** a control system and at least one sensor of the group of sensors made up of
- a sensor that measures the relative position and/or the change of relative position of the first car relative to the second car, especially their alignment with regard to their respective longitudinal axis,
- a sensor that measures the relative position of the first joint part relative to the first car, especially the alignment of a horizontal plane of the first joint part relative to a horizontal plane of the first car,
- a gyroscope that measures the rotational movement of the multi-car vehicle or the first car or the second car about a vertical axis,
- a sensor that senses the rotational speed of a wheel of the multi-car vehicle,
- a sensor that senses the turning angle of a steerable wheel of the multi-car vehicle,
- a sensor that senses the weight of the load in the first car and/or the second car,
whereby the control system generates control signals that control the brake based on the information provided by the sensor.

15. Multi-car vehicle according to any one of claims 10 to 14, **characterized by** cables and/or pipes that pass from the first car to the second car and which are arranged to pass from the first car to the second car substantially in a horizontal plane below the first joint part and the second joint part.
